# EUROPÄISCHE PATENTSCHRIFT

(11) **EP 2 572 940 B1**
(45) Veröffentlichungstag und Bekanntmachung des Hinweises auf die Patenterteilung: **19.11.2014**
(21) Anmeldenummer: 12184943.4
(22) Anmeldetag: 19.09.2012
(51) Int. Cl.: B60R 15/04

(54) **Toilette für Fahrzeuge, insbesondere für Busse, Reisemobile, Caravans und Yachten**
Toilet for vehicles, particularly for buses, camper vans, caravans and yachts
Toilette pour véhicules, notamment pour bus, camping-cars, caravanes et yachts

(30) Priorität: 20.09.2011 DE 102011113813
(43) Veröffentlichungstag der Anmeldung: 27.03.2013
(73) Patentinhaber: Dometic GmbH, 57074 Siegen (DE)
(72) Erfinder: Jochim, Tim, 57234 Wilnsdorf (DE); Oxenfarth, Jens, 58256 Ennepetal (DE)
(74) Vertreter: Grosse, Felix Christopher

(56) Entgegenhaltungen:
- EP-A1- 2 484 560
- DE-C1- 4 116 486
- US-A- 3 801 991
- US-A- 4 439 875

## Beschreibung

Die Erfindung betrifft eine Toilette für Fahrzeuge, insbesondere für Busse, Reisemobile, Caravans und Yachten, die ein Oberteil mit einer Toilettenschüssel und ein Trägerteil mit einem Kassettenschacht, eine Kassette, die in den Kassettenschacht einschiebbar ist, ein Durchleitteil, das zwischen Toilettenschüssel und der im eingeschobenen Zustand befindlichen Kassette angeordnet ist, einen Durchleitverschluss, durch den das Durchleitteil verschließbar ist, und einen Sperrmechanismus aufweist, der mit dem Durchleitverschluss und der Kassette koppelbar ist. Die Erfindung betrifft zudem ein Verfahren zum Betrieb einer solchen Toilette.

Derartige Toiletten sind im Stand der Technik unter anderem als Kassettentoiletten bekannt, beispielsweise aus der DE 41 16 486 C1. Diese werden in Fahrzeuge in vielfältigen Formen eingebaut. Das Trägerteil ist dabei in der Regel an den Fahrzeugen befestigt und trägt die Toilettenschüssel. In dem Trägerteil ist ein Kassettenschacht angeordnet, in den eine Kassette einschiebbar ist. Die Kassette wird auch als Fäkallentank bezeichnet. In der Regel ist dazu eine Klappe in der Außenwand des Fahrzeugs vorgesehen, so dass die Kassette von der Außenseite aus dem Fahrzeug entnehmbar bzw. in das Fahrzeug einschiebbar ist. Die Kassette weist einen Einlass auf, durch den Flüssigkeiten und Fäkalien von der Toilettenschüssel in die Kassette eingeleitet werden können. Der Einlass der Kassette ist durch eine oder mehrere Einlassabdeckungen abgedichtet und somit flüssigkeitsdicht und geruchsdicht verschließbar. Zum Teil sind bei bekannten Toiletten im Trägerteil oder in der Toilettenschüssel Vorrichtungen vorgesehen, um die Einlassabdeckungen beim Einschieben der Kassette in den Kassettenschacht zu verlagern und den Einlass der Kassette zur Einleitung von Fäkalien und Flüssigkeiten zu öffnen.

Als nachteilig an den bekannten Toiletten hat sich herausgestellt, dass die Toilettenschüssel an ihrem Auslass nicht abgedichtet ist, wenn die Kassette aus dem Kassettenschacht herausgezogen ist. Wird die Toilette in diesem Zustand versehentlich benutzt bzw. beinhaltet die Toilettenschüssel noch Restflüssigkeiten z.B. aus einem Spülkanal, fallen die Exkremente bzw. Flüssigkeiten durch den Auslass der Toilettenschüssel in den Kassettenschacht oder auf einen darunter liegenden Fahrzeugboden, der oftmals aus Holz ist. Die Verunreinigungen müssen dann mühsam wieder entfernt werden. Durch die Verunreinigungen kann es auch zu Beschädigungen des Fahrzeugs kommen. Ferner besteht eine erhebliche Verletzungsgefahr, wenn die Toilettenschüssel gereinigt wird und dabei ein Körperteil durch den Toilettenschüsselauslass gesteckt wird und zeitgleich die Kassette eingeschoben wird. Hierbei kann es zu Verletzungen des Körperteils kommen.

Die Aufgabe der Erfindung liegt daher ausgehend vom Stand der Technik darin, eine Toilette für Fahrzeuge und ein Verfahren zum Betrieb einer solchen bereitzustellen, wobei Flüssigkeiten und Feststoffe nur dann aus der Toilettenschüssel abfließen können, wenn sich eine Kassette im eingeschobenen Zustand befindet und zudem ein sicherer und zuverlässiger Betrieb der Toilette gewährleistet ist.

Diese Aufgabe wird mit einer Toilette für Fahrzeuge mit den Merkmalen von Anspruch 1 gelöst. Vorteilhafte Ausführungsformen der Toilette gehen aus den Ansprüchen 2 bis 7 hervor. Das erfindungsgemäße Verfahren geht aus den Ansprüchen 14 und 15 hervor.

Die Lösung der Aufgabe besteht in einer Toilette für Fahrzeuge, insbesondere für Busse, Reisemobile, Caravans oder Yachten, die erfindungsgemäß einen Sperrmechanismus mit einem Verschlussmitnehmer und einen Verschlussriegel aufweist , wobei der Verschlussmitnehmer in den Durchleitteilverschluss einrastbar und durch den Verschlussriegel ausrastbar ist.

Beider erfindungsgemäßen Toilette mit dem Sperrmechanismus ist also zusätzlich zu einer Einlassabdeckung, auch als Verschlussschieber bezeichnet, an der Kassette zwischen der Toilettenschüssel und der Kassette ein Durchleitteilverschluss angeordnet ist. Mithin wird ein Doppelverschluss bereitgestellt, der aus dem Durchleitteilverschluss und der Einlassabdeckung besteht. Durch den Durchleitteilverschluss kann das Abfließen von Flüssigkeiten und Feststoffen aus der Toilettenschüssel unterbunden werden. Durch den erfindungsgemäßen mit dem Durchleitverschluss und der Kassette koppelbaren Sperrmechanismus ist der Durchleitteilverschluss sperrbar, so dass er im gesperrten Zustand nicht öffenbar oder schließbar ist, zum Beispiel, wenn sich die Kassette nicht im eingeschobenen Zustand befindet. Durch den Durchleitteilverschluss kann zudem wirksam verhindert werden, dass etwas durch den Toilettenschüsselauslass gesteckt, transportiert oder befördert wird, wenn die Kassette ausgezogen ist. Dadurch wird möglichen Verunreinigungen, Beschädigungen und/oder Verletzungen vorgebeugt, falls noch etwas durch den Toilettenschüsselauslass gesteckt sein sollte, während die Kassette eingeschoben wird. Ferner wird durch den Verschlussmitnehmer und den Verschlussriegel sichergestellt, dass der Verschlussmitnehmer zu dem Durchleitverschluss auf einer begrenzten Wegstrecke verlagert werden kann. Mithin kann die Kassette bei geöffnetem Durchleitverschluss nicht aus dem Kassettenschacht gezogen werden.

Besonders bevorzugt weist der Sperrmechanismus der Toilette einen Verschlussriegel und einen Kassettenriegel auf, die über einen Kassettenmitnehmer und einen mit dem Kassettenmitnehmer gekoppelten Verschlussmitnehmer zwischen Freigabestellungen und Verriegelungsstellungen bewegbar sind. Diese Lösung kommt mit besonders wenigen und leichten Bauteilen aus. Die Teile sind einfach herzustellen und lassen sich leicht montieren.

Zweckmäßigerweise weist der Sperrmechanismus der Toilette einen mit dem Durchleitteilverschluss koppelbaren Verschlussmitnehmer und einen mit der Kassette koppelbaren Kassettenmitnehmer auf, wobei der Verschlussmitnehmer und der Kassettenmitnehmer miteinander bewegungsübertragend gekoppelt sind. Durch die Koppelbarkeit der Mitnehmer mit den zugeordneten Bauteilen ist es möglich, deren Bewegung in einem begrenzten Bereich zu übertragen und eine Entkopplung vorzunehmen, wenn der zulässige Bewegungsbereich der Mitnehmer überschritten ist. Darüber hinaus kann eine Verschiebung eines Mitnehmers an den anderen unmittelbar übertragen werden, auch wenn beide nicht einstückig ausgeführt sind. Mithin kann durch das Ausziehen der Kassette über den Kassettenmitnehmer und den Verschlussmitnehmer bewirkt werden, dass der Verschlussriegel den Durchleitteilverschluss gegen Ausziehen sperrt und umgekehrt.

Es ist zweckmäßig, wenn der Kassettenmitnehmer in die Kassette einrastbar und durch den Kassettenriegel ausrastbar ist. Auch durch diese Maßnahmen ist auf einfache Weise sichergestellt, dass die Mitnehmer von den zugeordneten Bauteilen auf eine begrenzte Wegstrecke verlagert werden können.

Beispielsweise sind der Verschlussmitnehmer und der Kassettenmitnehmer durch ein Kopplungselement, vorzugsweise in Form eines Bowdenzugs, einer Stange, eines Getriebes, eines Servomotors, einer Linear- oder Rotationsführung, eines Seilzugs, eines Kettenantriebs oder einem Hubmagneten, miteinander gekoppelt oder diese Mitnehmer sind einstückig ausgebildet. Vorteilhaft ist die Kopplung des Verschlussmitnehmers und des Kassettenmitnehmers derart ausgebildet, dass eine Verdrehung des Oberteils zu dem Trägerteil möglich ist. Mithin kann die Toilette auch in besonders kleine Nasszellen eingebaut werden, da deren Oberteil samt Toilettensitz zur Benutzung in eine geeignete Position gedreht werden kann.

Weiter bevorzugt sind der Verschlussriegel und/oder der Kassettenriegel durch Federn beaufschlagt. Die Federn können als Rückstellfedern ausgebildet sein, welche die Riegel in die Verriegelungsstellung bewegen, wenn sie außer Eingriff mit den Mitnehmern sind. Diese Anordnung vereinfacht den Aufbau der Toilette, da die Riegel nicht mehr aktiv in die Verriegelungsstellungen bewegt werden müssen. Alternativ ist auch eine Ausführungsform ohne Verwendung von Federn denkbar. Dabei treibt der Mitnehmer ein Zahnrad an. Beim Herausziehen oder Einschieben der Kassette dreht sich der Riegel in die Öffnungs- oder Schließstellung.

Nach einer besonders vorteilhaften Ausführungsform der Erfindung ist der Sperrmechanismus mit dem Durchleitteilverschluss und der Kassette gekoppelt ist.

Vorzugsweise ist dabei der Sperrmechanismus derart ausgebildet, dass der Durchleitteilverschluss nur dann aus einer Schließstellung bewegbar ist, wenn sich die Kassette im eingeschobenen Zustand befindet. Hierzu kann der Sperrmechanismus einen Riegel aufweisen, der durch die Kassette derart verlagerbar ist, dass eine Bewegung des Durchleitteilverschlusses verhindert wird.

Weiter bevorzugt ist es, wenn der Sperrmechanismus derart ausgebildet ist, dass die Kassette im eingeschobenen Zustand fixiert ist, wenn der Durchleitteilverschluss außerhalb der Schließstellung ist. Auch hierzu kann ein (weiterer) Riegel verwendet werden, um in die Kassette formschlüssig einzugreifen und eine Verlagerung zu unterbinden, solange der Durchleitteilverschluss geöffnet ist.

In einer Ausführungsform ist eine Einlassabdeckung an der Kassette durch Einschieben der Kassette in den Kassettenschacht automatisch öffenbar und durch Herausziehen der Kassette aus dem Kassettenschacht automatisch verschließbar.

Zweckmäßigerweise umfasst der Durchleitteilverschluss ein Schieberschwert und einen Schiebergriff. Der Schiebergriff ist dabei vorzugsweise so angeordnet, dass er von einer die Toilette benutzenden Person betätigt werden kann, so dass das Schieberschwert vor dem Toilettengang aus der Schließstellung in eine Offenstellung überführt und anschließend wieder zurückgeschoben werden kann. Grundsätzlich ist auch eine Automatisierung dieses Vorgangs denkbar. Wenn die Toilettenschüssel schwenkbar ist, verschwenkt der Schiebergriff vorzugsweise zusammen mit der Toilettenschüssel.

Vorteilhaft ist es, wenn das Durchleitteil gegenüber dem in der Schließstellung befindlichen Schieberschwert durch eine Dichtung abgedichtet ist. Vorzugsweise kommen zwei Dichtungen zum Einsatz, die ober- und unterhalb des Schieberschwerts angeordnet sind. Sie können beispielsweise als Ringdichtungen ausgebildet sein. Durch die Dichtung(en) ist sichergestellt, dass Flüssigkeiten und Fäkalien nicht aus dem Durchleitteil seitlich im Bereich des Schieberschwerts austreten können.

Weiterhin kann das Durchleitteil ein Schieberschwertgehäuse aufweisen. Durch das Schieberschwertgehäuse ist das Schieberschwert in jeder Stellung vom Durchleitteil bzw. dem Schieberschwertgehäuse umgeben. Somit können Verschmutzungen des Schieberschwertes, welche die Dichtungen zwischen Durchleitteil und Schieberschwert passiert haben, nicht nach außen gelangen.

Die Toilettenschüssel und das Durchleitteil sind vorzugsweise als einstückiges Bauteil ausgebildet. Mithin kann das Durchleitteil an die Toilettenschüssel angeformt sein. Somit ist die Anzahl der Bauteile der Toilette reduziert und die Montage vereinfacht.

Vorzugsweise ist an dem Durchleitteil ein Kassettenadapter angeordnet. Auf diese Weise ist der Übergang zur Kassette anpassbar. Beispielsweise ist es möglich, unterschiedliche Kassettenadapter zur Anpassung an verschiedene Kassettentypen am Durchleitteil zu befestigen.

Besonders vorteilhaft ist es, wenn der Kassettenadapter verschiebbar am Durchleitteil angeordnet ist und zwischen dem Kassettenadapter und dem Durchleitteil eine Dichtung vorgesehen ist. Auf diese Art und Weise kann ein Abstand, z. B. aufgrund von Fertigungs- oder Herstelltoleranzen, zwischen der Kassette und dem Durchleitteil einstellbar überbrückt werden. Durch verschiebbare Anordnung des Kassettenadapters können sogar Höhenunterschiede zwischen unterschiedlichen Kassetten ausgeglichen werden, die nacheinander in den Kassettenschacht eingeschoben werden. Weiterhin kann der Abstand zwischen einer höhenverstellbaren Toilettenschüssel und der Kassette auf diese Weise einstellbar überbrückt werden.

In einer bevorzugten Ausführungsform weist der Kassettenadapter einen Abdeckungsmitnehmer für eine verschiebbare Einlassabdeckung der Kassette auf. Der Abdeckungsmitnehmer ist so ausgebildet, dass er in die Einlassabdichtung eingreift, wenn die Kassette in den Kassettenschacht eingeschoben wird. Auf diese Weise wird die Einlassabdeckung ortsfest gehalten, wenn die Kassette vollständig in den Kassettenschacht eingeschoben wird. Mithin wird die Einlassabdeckung während des Einschubs der Kassette von der Einlassöffnung weggeschoben.

Vorzugsweise ist der Mitnehmer durch eine Rückholfeder beaufschlagt. Die Rückholfeder stellt sicher, dass sich der Abdeckungsmitnehmer in einer Ausgangsstellung befindet, wenn die Kassette aus dem Kassettenschacht herausgezogen ist. Die Rückholfeder kann Teil eines Rückholmechanismus sein. Der Rückholmechanismus kann einen Rückholarm aufweisen. Die Rückholfeder kann auch als Rückholarm ausgebildet sein.

Besonders vorteilhaft ist es, wenn im eingeschobenen Zustand der Kassette das Durchleitteil und eine Einlassöffnung der Kassette fluchten. Mithin ist sichergestellt, dass die Fäkalien und die Flüssigkeiten von der Toilettenschüssel direkt in die Kassette gelangen, ohne zwischenzeitlich austreten zu können.

Das Oberteil kann schwenkbar am Trägerteil, oder einem ähnlichen Bauteil, befestigt sein. Durch die schwenkbare Befestigung kann unterschiedlichen baulichen Gegebenheiten im Fahrzeug Rechnung getragen werden. So ist es zum Beispiel möglich, in einer engen Nasszelle eine erfindungsgemäße Toilette anzuordnen und das Oberteil samt der Toilettenschüssel aus dem Weg zu schwenken, wenn die Nasszelle beispielsweise als Dusche benutzt werden soll.

Gemäß einer weiteren Ausführungsform kann die Kassette in den Kassettenschacht eingeschoben sein. Nachfolgend wird das erfindungsgemäße Verfahren beschrieben, wobei die Abfolge der erfindungsgemäßen Schritte mit dem Einführen der Kassette in den Kassettenschacht beginnt. Allerdings ist dieser gewählte Beginn der Schrittabfolge nicht zwingend notwendig. Vielmehr kann der Beginn der beschriebenen und erfindungsgemäßen Schrittabfolge auch mit der bereits im Kassettenschacht befindlichen Kassette und deren Auswirkungen auf den Sperrmechanismus oder auch mit der Entfernung der im Kassettenschacht befindlichen und den sich daraus ergebenden Auswirkungen auf den Sperrmechanismus erfolgen. Der insofern gewählte Beginn der Schrittabfolge des Erfindungsgemäßen Verfahrens ist also nicht einschränkend und kann vielmehr bei jedem Einzelschritt liegen, je nachdem in welchem Ausgangszustand sich die Toilette befindet.

Nach dem erfindungsgemäßen Verfahren zum Betrieb der Toilette erfolgt in einem ersten Schritt zunächst das Einführen der Kassette in den Kassettenschacht. Mit dem Einführen der Kassette erfolgt gleichzeitig und automatisch die Freigabe der Einlassöffnung der Kassette. Dabei wird auf die Einlassabdeckung der Kassette insofern eingewirkt, dass diese aus Ihrer Schließstellung, bei welcher die Einlassöffnung der Kassette vorzugsweise geruchs- und flüssigkeitsdicht abgedichtet ist, in eine geöffnete Position bewegt wird.

Nachdem die Kassette in den Kassettenschacht eingeschoben ist, wirkt die Kassette unmittelbar auf den erfindungsgemäßen Sperrmechanismus. Dabei wird der Sperrmechanismus betätigt und der Durchleitteilverschluss freigegeben. Damit ist die bedarfsgerechte Verwendung der Toilette ermöglicht. Die Kassette ist durch Sperrmechanismus in Ihrer Position im Kassettenschacht gegen ein Entfernen gesperrt während das Bewegen des Durchleitteilverschlusses von einer Schließstellung zum Verschluss des Durchleitteils in eine geöffnete Stellung zur Öffnung des Durchleitteils ermöglicht ist. Insofern kann die Toilette nun benutzt werden und Fäkalien und andere Toiletteninhalte gelangen nach Öffnung des Durchleitteilverschlusses durch den Durchleiteil in die Kassette. Durch die Sperrung der Kassette wird in vorteilhafter Weise sichergestellt, dass diese, während die Toilette verwendet wird oder zumindest verwendet werden kann, nicht aus dem Kassettenschacht entfernt werden kann.

Nach der Benutzung der Toilette wird der Durchleitteilverschluss wieder in seine Schließstellung bewegt, so dass der Durchleitteilverschluss auf den Sperrmechanismus einwirkt. Dies ist auch erforderlich, wenn die Kassette beispielsweise zur Leerung aus dem Kassettenschacht entfernt werden soll. Durch das Betätigen des Sperrmechanismus erfolgt die Freigabe der Kassette durch den Sperrmechanismus. Gleichzeitig erfolgt die Verriegelung des Durchleitteilverschlusses in der geschlossenen Stellung des Durchleitteilverschlusses. Die Kassette kann dann im Bedarfsfall aus dem Kassettenschacht entfernt werden. Sofern die Kassette aus dem Kassettenschacht entnommen wird, bewirkt der erfindungsgemäße Sperrmechanismus, dass der Durchleitteilverschlusses in der Schließstellung gesperrt ist. Somit ist in vorteilhafter Weise sichergestellt, dass bei entfernter Kassette die Toilette nicht benutzt werden kann, da der Durchleitverschluss nicht geöffnet werden kann. Selbst wenn die Toilette jetzt benutzt würde, würde durch den in Schließstellung gesperrten Durchleitteilverschluss wirksam unterbunden, dass Fäkalien und dergleichen in den leeren Kassettenschacht gelangen können. Zudem ist auch das Einführen sonstiger Gegenstände oder Körperteile durch das Durchleitteil in den Kassettenschacht wirksam unterbunden.

Sofern die Kassette aus dem Kassettenschacht entnommen wird, wird die Einlassöffnung der Kassette durch Einwirken auf die Einlassabdeckung der Kassette automatisch verschlossen, so dass diese wieder vorzugsweise geruchs- und flüssigkeitsdicht abgedichtet ist.

Die Erfindung ist nachfolgend anhand von einem in den Figuren dargestellten Ausführungsbeispiel näher erläutert. Es zeigen:
- Fig. 1 und 2: eine vereinfacht dargestellte erfindungsgemäße Toilette im Querschnitt und einer Seitenansicht;
- Fig. 3: die Toilette von Fig. 1, wobei der Durchleitteilverschluss vergrößert im Querschnitt und im Detail dargestellt ist;
- Fig. 4 bis 9: den Sperrmechanismus in Draufsichten;
- Fig. 10 und 11: die Toilette von Fig. 1 nach dem Ausziehen der Kassette;
- Fig. 12 und 13: die Toilette von Fig. 1, wobei der Durchleitteilverschluss in der Schließstellung gezeigt ist; und
- Fig. 14 und 15: die Toilette von Fig. 1, wobei der Durchleitteilverschluss und die Einlassabdeckung der Kassette geöffnet sind.

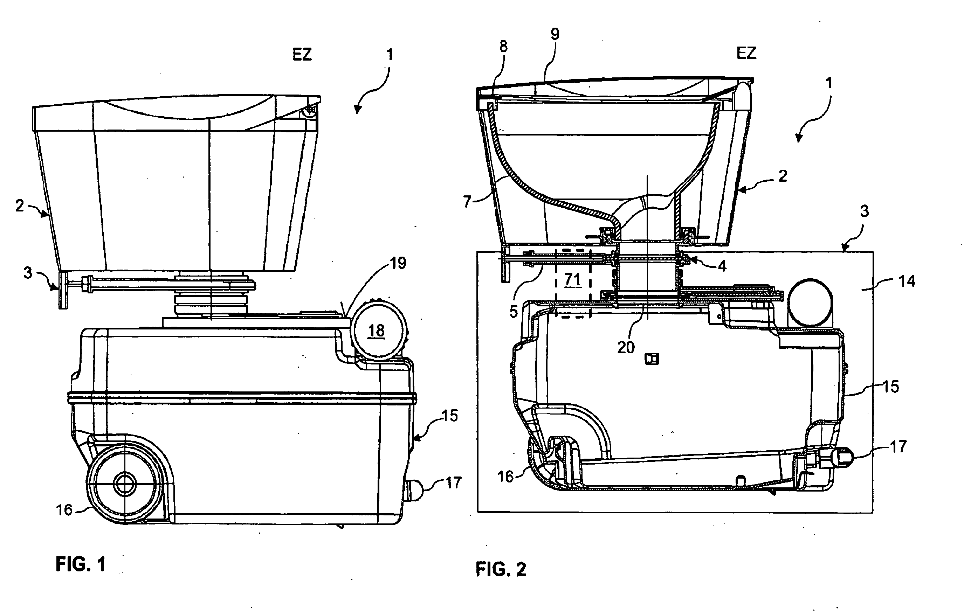

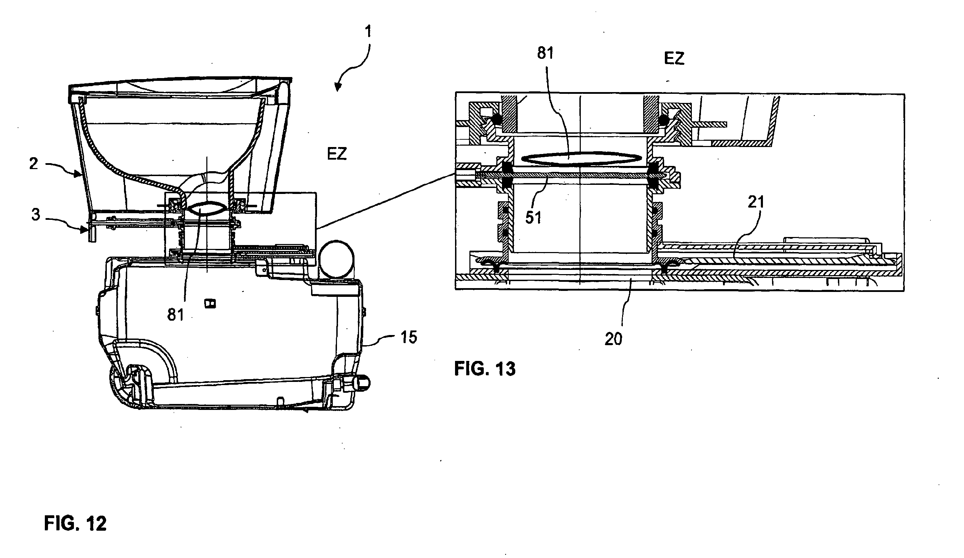

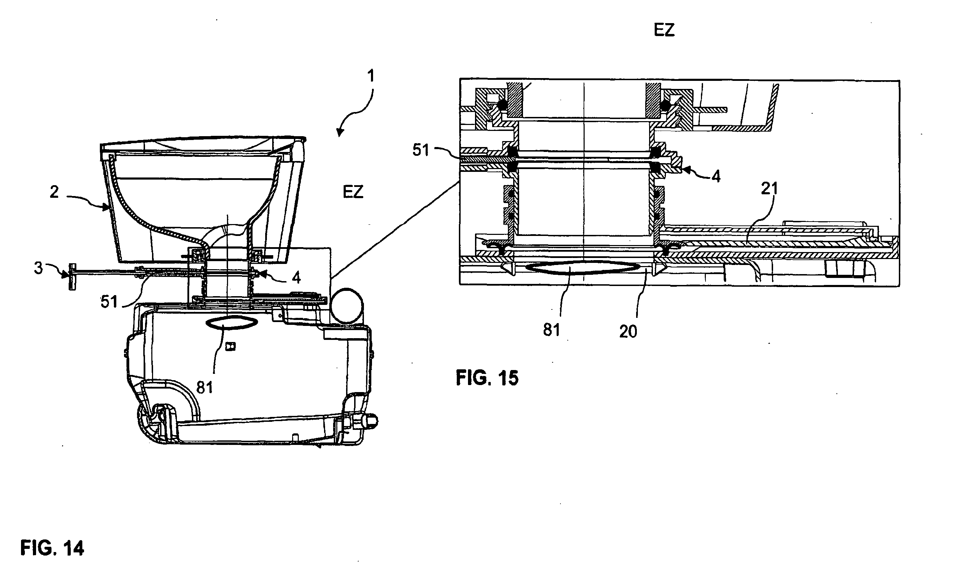

In den Figuren 1 bis 15 sind der erfindungsgemäße Sperrmechanismus und die erfindungsgemäße Toilette 1 für Fahrzeuge, insbesondere für Busse, Reisemobile, Caravans und Yachten, jeweils ausschnittsweise gezeigt. Die Toilette 1 weist ein Oberteil 2 und ein Trägerteil 3 auf, wobei vom Trägerteil 3 nur das Durchleitteil 4 mit dem Durchleitteilverschluss 5 dargestellt ist. Das Oberteil 2 umfasst ein Gehäuse 6, in dem eine Toilettenschüssel 7 angeordnet ist. Am Oberteil 2 sind eine Toilettenbrille 8 und ein Toilettendeckel 9 schwenkbar befestigt. Die Toilettenschüssel 7 weist an einem unteren Ende 10 einen Toilettenschüsselauslass 11 auf. Im Bereich des Toilettenschüsselauslasses 11 ist das Oberteil 2 am Trägerteil 3 über ein Gewinde 12 schwenkbar und höhenverstellbar gelagert. Zwischen dem Trägerteil 3 und dem Toilettenschüsselauslass 11 ist eine Ringdichtung 13 vorgesehen. Das Trägerteil 3 umfasst das Durchleitteil 4 und einen Kassettenschacht 14, in den eine Kassette 15 einschiebbar ist.

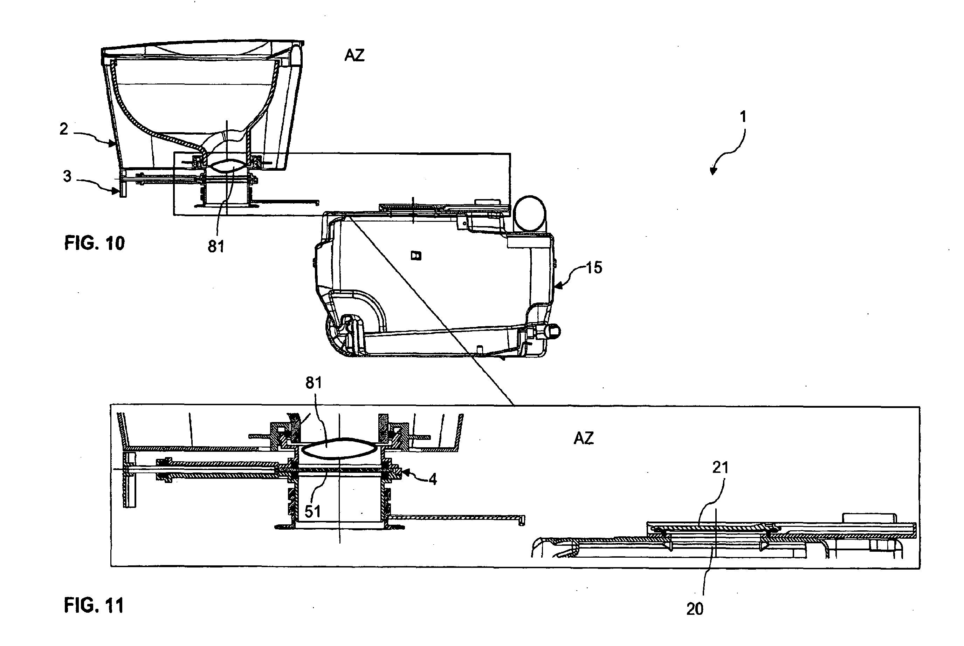

In den Fig. 1 bis 4 und 12 bis 15 ist die Kassette 15 jeweils im vollständig eingeschobenen Zustand EZ gezeigt. In den Fig. 10 und 11 ist die Kassette 15 in einem ausgezogenen Zustand AZ dargestellt. Die Kassette 15 ist als Aufbewahrungstank für Flüssigkeiten und Fäkalien ausgebildet. Zwecks Geruchsvermeidung können chemische Zusätze in die Kassette 15 eingefüllt sein. Um den Transport der Kassette 15 zu einer Entleerungsstation zu erleichtern, ist die Kassette 15 mit zwei Rädern 16 und einem teleskopartig ausziehbaren Griff 17 versehen. Oberhalb des Griffs 17 ist ein Entleerungsstutzen 18 angeordnet. Die Kassette 15 weist auf einer Oberseite 19 eine Einlassöffnung 20 auf. Die Einlassöffnung 20 ist durch eine horizontal verschiebbare Einlassabdeckung 21 verschließbar. An der Einlassöffnung 20 ist eine Kassettendichtung 22 vorgesehen, die zwei bogenförmig nach innen und außen kragende Dichtlippen 23; 24 aufweist. Durch die Kassettendichtung 22 ist die Einlassöffnung 20 bei aufliegender Einlassabdeckung 21 flüssigkeitsdicht und geruchsdicht verschlossen. Ist die Kassette 15 in den Kassettenschacht 14 eingeschoben, dichtet die Kassettendichtung 22 den Übergang zum Durchleitteil 4 ab.

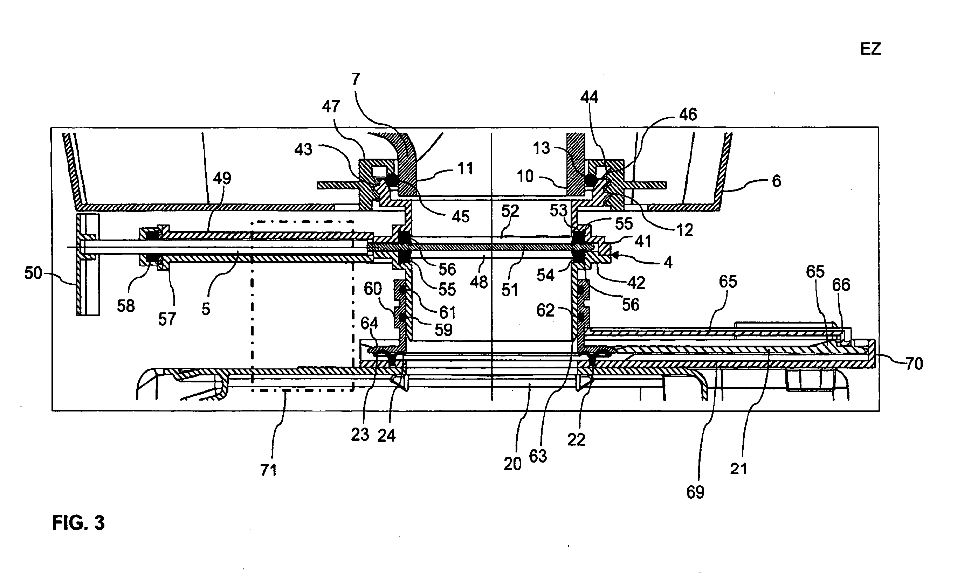

Das Durchleitteil 4 ist insbesondere in Fig. 3 im Detail dargestellt. Das Durchleitteil 4 umfasst ein Durchleitteiloberteil 41 und ein Durchleitteilunterteil 42, die beide formschlüssig miteinander verbunden sind. Das Durchleitteiloberteil 41 weist an einem oberen Ende 43 einen Gewindeabschnitt 44 für das Oberteil 2 der Toilette 1 und einen Dichtsitz 45 für die Ringdichtung 13 zwischen dem Durchleitteiloberteil 41 und der Toilettenschüssel 7 auf. Der Gewindeabschnitt 44 greift in einen Gegengewindeabschnitt 46 eines Zwischenteils 47 des Oberteils 2 ein. Zwischen dem Durchleitteiloberteil 41 und dem Durchleitteilunterteil 42 ist eine Führung 48 und ein Schieberschwertgehäuse 49 für den Durchleitteilverschluss 5 ausgebildet. Über einen Schiebergriff 50 ist ein Schieberschwert 51 im Schieberschwertgehäuse 49 und der Führung 48 verlagerbar. Das Schieberschwert 51 ist in einem Durchleitbereich 52 jeweils gegenüber dem Durchleitteiloberteil 41 und dem Durchleitteilunterteil 42 durch zwei Ringdichtungen 53, 54 abgedichtet. Die Ringdichtungen 53, 54 weisen Stege 55 auf, die in Nuten 56 im Durchleitteiloberteil 41 und im Durchleitteilunterteil 42 eingreifen. An einem freien Ende 57 des Schieberschwertgehäuses 49 ist eine weitere Dichtung 58 vorgesehen, um das Schieberschwertgehäuse 49 gegen den Austritt von Flüssigkeiten und Feststoffen, insbesondere Fäkalien, zu sichern. An einem unteren Ende 59 des Durchleitteilunterteils 42 ist ein Kassettenadapter 60 vorgesehen. Der Kassettenadapter 60 ist am Durchleitteilunterteil 42 axial verschiebbar angeordnet. Zwischen dem Durchleitteilunterteil 42 und dem Kassettenadapter 60 sind zwei Ringdichtungen 61, 62 vorgesehen. Der Kassettenadapter 60 weist an einem unteren Ende 63 einen Flansch 64 auf, an dem die Kassettendichtung 22 im eingeschobenen Zustand EZ der Kassette 15 zur Anlage gelangt. Seitlich ist am Kassettenadapter 60 ein Mitnehmer 65 für eine Einlassabdeckung 21 der Kassette 15 vorgesehen. Wird die Kassette 15 in den Kassettenschacht eingeschoben, so greift ein Halteabschnitt 66 des Mitnehmers 65 formschlüssig in eine Rastnase 67 in der Einlassabdeckung ein und zieht die Einlassabdeckung 21 von der Einlassöffnung 20 in Richtung Entleerungsstutzen 18. Der Mitnehmer 65 ist von einer Rückholfeder beaufschlagt. Die Einlassabdeckung 21 ist kassettenseitig in einer Abdeckungsführung 69 gehalten. Die Abdeckungsführung 69 weist endseitig einen Randsteg 70 auf, der einen Anschlag für die Einlassabdeckung 21 bildet. Im eingeschobenen Zustand EZ der Kassette 15 ist die Einlassabdeckung 21 zwischen dem Randsteg 70 und dem Kassettenadapter 60 fixiert.

Zwischen dem Schieberschwert 51 und der Kassette 15 ist ein Sperrmechanismus 71 vorgesehen, der in Fig. 3 durch ein strichpunktiertes Rechteck angedeutet ist.ist.

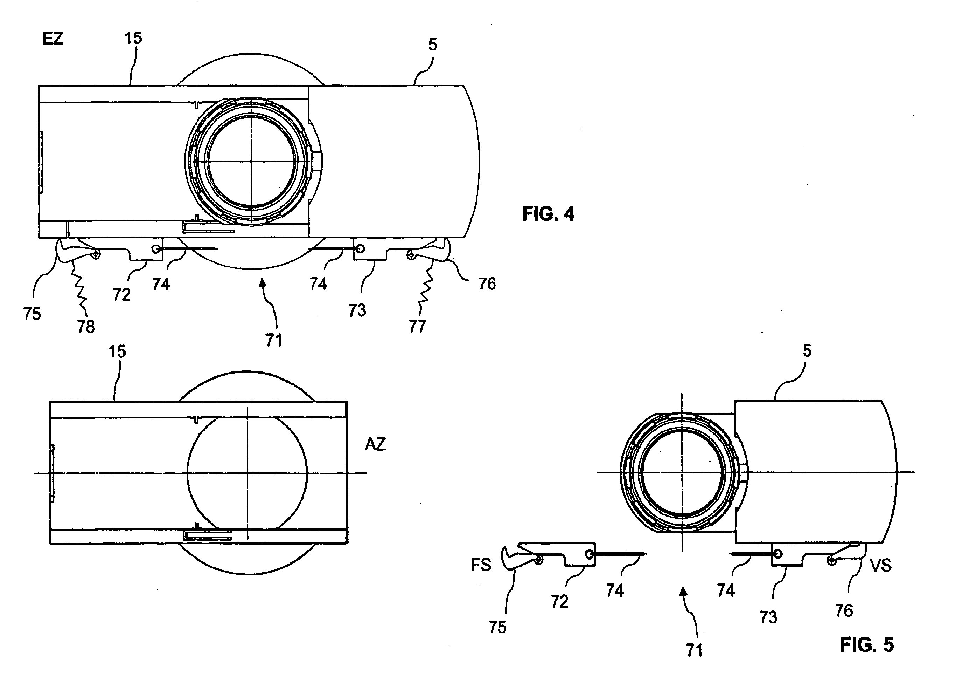

Der Sperrmechanismus 71 wird anhand der Fig. 4 bis 9 im Detail erläutert. Der Sperrmechanismus 71 umfasst einen mit der Kassette 15 koppelbaren Kassettenmitnehmer 72 und einen mit dem Durchleitteilverschluss 5 koppelbaren Verschlussmitnehmer 73. Beide Mitnehmer sind im Trägerteil 3 bzw. Oberteil 2 der Toilette 1 verschiebbar gelagert. Die Mitnehmer 72, 73 sind zudem miteinander durch ein Kopplungselement 74 gekoppelt. Auf diese Weise kann eine Verlagerung eines Mitnehmers 72, 73 auf den anderen Mitnehmer 72, 73 übertragen werden. Die Mitnehmer 72, 73 sind über eine kurze Strecke verlagerbar, um sie mit einem Kassettenriegel 75 bzw. einem Verschlussriegel 76 in Eingriff zu bringen. Die Mitnehmer 72, 73 sind insbesondere in den Durchleitteilverschluss 5 bzw. die Kassette 15 einrastbar. Die Mitnehmer 72, 73 werden durch Anschlagen an die jeweiligen Riegel 75, 76 in Endstellungen ES aus der Kassette 15 bzw. dem Durchleitteilverschluss 5 ausgerastet. Die Riegel 75, 76 sind durch Federn 77,78 beaufschlagt, die sie in eine Verriegelungsstellung VS bewegen, insbesondere rotieren, wenn sie nicht in Eingriff mit dem zugeordneten Mitnehmer 72, 73 sind.

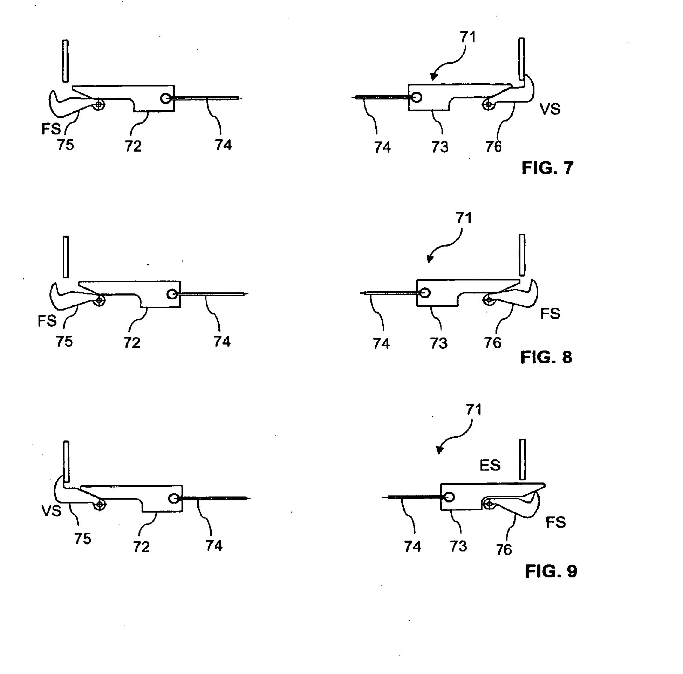

Wenn die Kassette 15 und der Durchleitteilverschluss 5 eingeschoben sind, sind der Kassettenmitnehmer 72 und der Verschlussmitnehmer 73 mit dem Verschlussriegel 76 und dem Kassettenriegel 75 in Eingriff, so dass diese in einer Freigabestellung FS gehalten werden. Dieser Zustand ist in den Fig. 4 und 8 gezeigt. In diesem Zustand kann die Kassette 15 oder der Durchleitteilverschluss 5 ausgezogen werden.

Beim Ausziehen der Kassette 15 wird der Kassettenmitnehmer 72 eine kurze Wegstrecke mit der Kassette 15 bewegt, ehe er aus der Kassette 15 ausrastet. Durch die Bewegung des Kassettenmitnehmers 72 wird über das Kopplungselement 74 der Verschlussmitnehmer 73 ebenfalls derart verlagert, dass der Verschlussmitnehmer 73 außer Eingriff mit dem Verschlussriegel 76 gebracht wird. Daraufhin wird der Verschlussriegel 76 durch eine Feder 77 in eine Verriegelungsstellung VS gedrückt, insbesondere rotiert, in der der Verschlussriegel 76 ein Ausziehen des Durchleitteilverschlusses 5 verhindert. Dieser Zustand ist insbesondere in den Fig. 5 und 7 gezeigt.

Beim Einschieben der Kassette 15 rastet der Kassettenmitnehmer 72 auf dem letzten Wegabschnitt in die Kassette 15 ein. Die Bewegung der Kassette 15 wird über den Kassettenmitnehmer 72 und das Kopplungselement 74 zum Verschlussmitnehmer 73 übertragen, so dass der Verschlussmitnehmer 73 mit dem Verschlussriegel 76 in Eingriff gebracht wird und den Verschlussriegel 76 in die Freigabestellung FS bewegt.

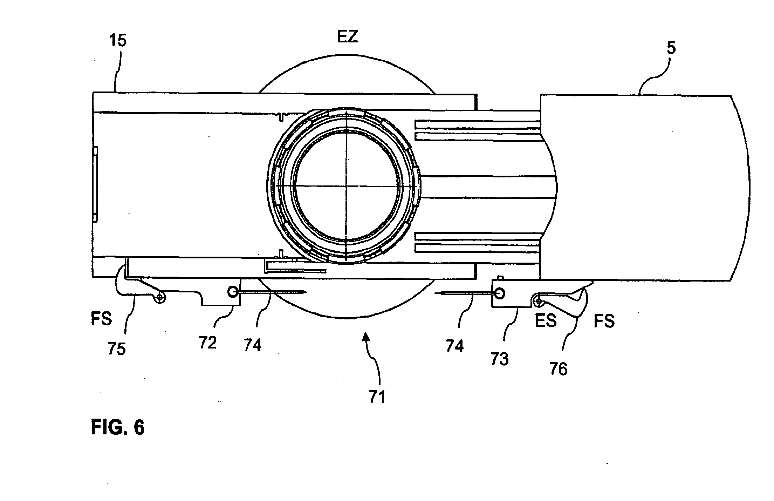

Genau umgekehrt funktioniert es beim Ausziehen des Durchleitteilverschlusses 5. Beim Ausziehen des Durchleitteilverschlusses 5 wird der Verschlussmitnehmer 73 eine kurze Wegstrecke mit dem Durchleitteilverschluss 5 bewegt, ehe er aus dem Durchleitteilverschluss 5 ausrastet. Durch die Bewegung des Verschlussmitnehmers 73 wird über das Kopplungselement 74 der Kassettenmitnehmer 72 ebenfalls derart verlagert, dass der Kassettenmitnehmer 72 außer Eingriff mit dem Kassettenriegel 75 gebracht wird. Daraufhin wird der Kassettenriegel 75 durch eine Feder 78 in eine Verriegelungsstellung VS gedrückt, insbesondere rotiert, in der der Kassettenriegel 75 ein Ausziehen der Kassette 15 verhindert. Dieser Zustand ist in den Fig. 6 und 9 gezeigt.

Beim Einschieben des Durchleitteilverschlusses 5 rastet der Verschlussmitnehmer 73 auf dem letzten Wegabschnitt in den Durchleitteilverschluss 5 ein. Die Bewegung des Durchleitteilverschlusses 5 wird über den Verschlussmitnehmer 73 und das Kopplungselement 74 zum Kassettenmitnehmer 72 übertragen, so dass der Kassettenmitnehmer 72 mit dem Kassettenriegel 75 in Eingriff gebracht wird und den Kassettenriegel 75 in die Freigabestellung FS bewegt.

Auf diese Weise ist durch den erfindungsgemäßen Sperrmechanismus 71 sichergestellt, dass keine Flüssigkeiten und Feststoffe 81 durch das Durchleitteil 4 gelangen können, wenn keine Kassette 15 in den Kassettenschacht 14 eingeschoben ist. Weiterhin ist sichergestellt, dass bei geöffnetem Durchleitteilverschluss 5 die Kassette 15 nicht aus dem Kassettenschacht 14 herausgezogen werden kann.

### Bezugszeichen

- 1 -: Toilette
- 2 -: Oberteil
- 3 -: Trägerteil
- 4 -: Durchleitteil
- 5 -: Durchleitteilverschluss
- 6 -: Gehäuse
- 7 -: Toilettenschüssel
- 8 -: Toilettenbrille
- 9 -: Toilettendeckel
- 10 -: unteres Ende von 7
- 11 -: Toilettenschüsselauslass
- 12 -: Gewinde
- 13 -: Ringdichtung
- 14 -: Kassettenschacht
- 15 -: Kassette
- 16 -: Rad
- 17 -: Griff
- 18 -: Entleerungsstutzen
- 19 -: Oberseite von 15
- 20 -: Einlassöffnung
- 21 -: Einlassabdeckung
- 22 -: Kassettendichtung
- 23 -: Dichtlippe
- 24 -: Dichtlippe
- 41 -: Durchleitteiloberteil
- 42 -: Durchleitteilunterteil
- 43 -: oberes Ende von 41
- 44 -: Gewindeabschnitt
- 45 -: Dichtsitz
- 46 -: Gegengewindeabschnitt
- 47 -: Zwischenteil
- 48 -: Führung
- 49 -: Schieberschwertgehäuse
- 50 -: Schiebergriff
- 51 -: Schieberschwert
- 52 -: Durchleitbereich
- 53 -: Ringdichtung
- 54 -: Ringdichtung
- 55 -: Steg
- 56 -: Nut
- 57 -: freies Ende von 49
- 58 -: Dichtung
- 59 -: unteres Ende von 42
- 60 -: Kassettenadapter
- 61 -: Ringdichtung
- 62 -: Ringdichtung
- 63 -: unteres Ende von 60
- 64 -: Flansch
- 65 -: Mitnehmer
- 66 -: Halteabschnitt
- 67 -: Rastnase
- 69 -: Abdeckungsführung
- 70 -: Randsteg
- 71 -: Sperrmechanismus
- 72 -: Kassettenmitnehmer
- 73 -: Verschlussmitnehmer
- 74 -: Kopplungselement
- 75 -: Kassettenriegel
- 76 -: Verschlussriegel
- 77 -: Feder
- 78 -: Feder
- 81 -: Feststoff

- AZ -: ausgezogener Zustand
- ES -: Endstellung
- EZ -: eingeschobener Zustand
- FS -: Freigabestellung
- VS -: Verriegelungsstellung

## Patentansprüche

1. Toilette für Fahrzeuge, insbesondere für Busse, Reisemobile, Caravans oder Yachten, die ein Oberteil (2) mit einer Toilettenschüssel (7) und ein Trägerteil (3) mit einem Kassettenschacht (14), eine Kassette (15), die in den Kassettenschacht (14) einschiebbar ist, ein Durchleitteil (4), das zwischen der Toilettenschüssel (7) und der im eingeschobenen Zustand (EZ) befindlichen Kassette (15) angeordnet ist, einen Durchleitteilverschluss (5), durch das das Durchleitteil (4) verschließbar ist, und einen Sperrmechanismus (71) aufweist, der mit dem Durchleitteilverschluss (5) und der Kassette (15) koppelbar ist, **dadurch gekennzeichnet, dass** der Sperrmechanismus (71) einen Verschlussmitnehmer (73) und einen Verschlussriegel (76) aufweist, wobei der Verschlussmitnehmer (73) in den Durchleitteilverschluss (5) einrastbar ist und durch den Verschlussriegel (76) ausrastbar ist.

2. Toilette nach Anspruch 1, **dadurch gekennzeichnet, dass** der Sperrmechanismus (71) einen Verschlussriegel (76) und einen Kassettenriegel (75) aufweist, die über einen Kassettenmitnehmer (72) und einen mit dem Kassettenmitnehmer (72) gekoppelten Verschlussmitnehmer (73) zwischen Freigabestellungen (FS) und Verriegelungsstellungen (VS) bewegbar sind.

3. Toilette nach Anspruch 1 oder 2, **dadurch gekennzeichnet, dass** der Sperrmechanismus (71) einen mit dem Durchleitteilverschluss (5) koppelbaren Verschlussmitnehmer (73) und einen mit der Kassette (15) koppelbaren Kassettenmitnehmer (72) aufweist, wobei der Verschlussmitnehmer (73) und der Kassettenmitnehmer (72) miteinander bewegungsübertragend gekoppelt sind.

4. Toilette nach einem der vorhergehenden Ansprüche, **dadurch gekennzeichnet, dass** der Kassettenmitnehmer (72) in die Kassette (15) einrastbar ist und durch den Kassettenriegel (75) ausrastbar ist.

5. Toilette nach einem der vorhergehenden Ansprüche, **dadurch gekennzeichnet, dass** der Verschlussmitnehmer (73) und der Kassettenmitnehmer (72) durch ein Kopplungselement (74), vorzugsweise in Form eines Bowdenzugs, einer Stange, eines Getriebes, eines Servomotors, einer Linear- oder Rotationsführung, eines Seilzugs, eines Kettenantriebs oder eines Hubmagneten, miteinander gekoppelt sind oder einstückig ausgebildet sind.

6. Toilette nach einem der vorhergehenden Ansprüche, **dadurch gekennzeichnet, dass** die Kopplung des Verschlussmitnehmers (73) und des Kassettenmitnehmers (72) derart ausgebildet ist, dass eine Verdrehung des Oberteils (2) zu dem Trägerteil (3) möglich ist.

7. Toilette nach einem der vorhergehenden Ansprüche, **dadurch gekennzeichnet, dass** der Verschlussriegel (76) und der Kassettenriegel (75) durch Federn (77, 78) beaufschlagt sind.

8. Toilette nach einem der vorhergehenden Ansprüche, **dadurch gekennzeichnet, dass** der Sperrmechanismus (71) mit dem Durchleitteilverschluss (5) und der Kassette (15) gekoppelt ist.

9. Toilette nach Anspruch 8, **dadurch gekennzeichnet, dass** der Sperrmechanismus (71) derart ausgebildet ist, dass der Durchleitteilverschluss (5) nur dann aus einer Schließstellung bewegbar ist, wenn sich die Kassette (15) im eingeschobenen Zustand (EZ) befindet.

10. Toilette nach Anspruch 8 oder 9, **dadurch gekennzeichnet, dass** der Sperrmechanismus (71) derart ausgebildet ist, dass die Kassette (15) im eingeschobenen Zustand (EZ) fixiert ist, wenn der Durchleitteilverschluss (5) außerhalb der Schließstellung ist.

11. Toilette nach einem der Ansprüche 8 bis 10, **dadurch gekennzeichnet, dass** eine Einlassabdeckung (21) an der Kassette (15) durch Einschieben der Kassette (15) in den Kassettenschacht (14) öffenbar und durch Herausziehen der Kassette (15) aus dem Kassettenschacht (14) verschließbar ist.

12. Toilette nach einem der Ansprüche 8 bis 11, **dadurch gekennzeichnet, dass** der Durchleitteilverschluss (5) ein Schieberschwert (51) und einen Schiebergriff (50) umfasst.

13. Toilette nach einem der Ansprüche 8 bis 12, **dadurch gekennzeichnet, dass** im eingeschobenen Zustand (EZ) der Kassette (15) das Durchleitteil (4) und eine Einlassöffnung (20) der Kassette (15) fluchten.

14. Verfahren zum Betrieb der Toilette nach einem der vorhergehenden Ansprüche, **gekennzeichnet durch** folgende Schritte:
a) Einführen der Kassette (15) in den Kassettenschacht (14) und Freigabe der Einlassöffnung (20) der Kassette (15) **durch** Einwirken auf die Einlassabdeckung (21) der Kassette (15);
b) Einwirken der Kassette (15) auf den Sperrmechanismus (5);
c) Betätigen des Sperrmechanismus (71) und Freigabe des Durchleitteilverschlusses (5);
d) bedarfsgerechtes Bewegen des Durchleitteilverschlusses (5) von einer Schließstellung zum Verschluss des Durchleitteils (4) in eine geöffnete Stellung zur Öffnung des Durchleitteils (4) und gleichzeitiges Verriegeln der Kassette (15) im Kassettenschacht (14);
e) Bewegen des Durchleitteilverschlusses (5) in die geschlossenen Stellung;
f) Einwirken des Durchleitteilverschlusses (5) auf den Sperrmechanismus (5);
g) Betätigen des Sperrmechanismus (71) zur Verriegelung des Durchleitteilverschlusses (5) in der geschlossenen Stellung des Durchleitteilverschlusses (5) und gleichzeitige Freigabe der Kassette (15) zur Entfernung aus dem Kassettenschacht (14);

15. Verfahren zum Betrieb der Toilette nach Anspruch 14, wobei nach Schritt g) die Entnahme der Kassette aus dem Kassettenschacht (14) und der Verschluss der Einlassöffnung (20) der Kassette (15) durch Einwirken auf die Einlassabdeckung (21) der Kassette (15) folgt.

## Claims

1. A toilet for vehicles, particularly for buses, camper vans, caravans or yachts, which has an upper portion (2) with a toilet bowl (7) and a support portion (3) with a coffer shaft (14), a coffer (15), which may be inserted into the coffer shaft (14), a conveying portion (4), which is arranged between the toilet bowl (7) and the coffer (15) situated in the inserted state (EZ), a conveying portion valve (5), by which the conveying portion (4) may be closed, and a blocking mechanism (71), which may be coupled to the conveying portion valve (5) and the coffer (15), **characterised in that** the blocking mechanism (71) has a closure dog (73) and a closure catch (76), whereby the closure dog (73) may be latched in the conveying portion valve (5) and may be unlatched by the closure catch (76).

2. A toilet as claimed in claim 1, **characterised in that** the blocking mechanism (71) has a closure catch (76) and a coffer catch (75), which are movable between released positions (FS) and latched positions (VS) by means of a coffer dog (72) and a closure dog (73) coupled to the coffer dog (72).

3. A toilet as claimed in claim 1 or 2, **characterised in that** the blocking mechanism (71) has a closure dog (73), which may be coupled to the conveying portion valve (5), and a coffer dog (72), which may be coupled to the coffer (15), wherein the closure dog (73) and the coffer (72) are coupled together so as to transmit motion between them.

4. A toilet as claimed in one of the proceeding claims, **characterised in that** the coffer dog (72) may be latched in the coffer (15) and may be unlatched by the coffer catch (75).

5. A toilet as claimed in one of the proceedings claims, **characterised in that** the closure dog (73) and the coffer dog (72) are coupled together by a coupling element (74), preferably in the form of a Bowden cable, a rod, a gear mechanism, a servo motor, a linear or rotary guide, a linkage, a chain drive or a lifting magnet or are integrally constructed.

6. A toilet as claimed in one of the preceding claims **characterised in that** the coupling of the closure dog (73) and the coffer dog (72) is constructed so that twisting of the upper portion (2) relative to the support portion (3) is possible.

7. A toilet as claimed in one of the preceding claims, **characterised in that** the closure catch (76) and the coffer catch (75) are acted on by springs (77, 78).

8. A toilet as claimed in one of the preceding claims, **characterised in that** the blocking mechanism (71) is coupled to the conveying portion valve (5) and the coffer (15).

9. A toilet as claimed in claim 8, **characterised in that** the blocking mechanism (71) is constructed so that the conveying portion valve (5) is only movable out of a closed position when the coffer (15) is located in the inserted state (EZ).

10. A toilet as claimed in claim 8 or 9, **characterised in that** the blocking mechanism (71) is constructed so that the coffer (15) is fixed in position in the inserted state (EZ) when the conveying portion valve (5) is out of the closed position.

11. A toilet as claimed in one of claims 8 to 10, **characterised in that** an inlet cover (21) on the coffer (15) is openable by an inserting the coffer (15) into the coffer shaft (14) and is closable by withdrawing the coffer (15) from the coffer shaft (14).

12. A toilet as claimed in one of claims 8 to 11, **characterised in that** the conveying portion valve (5) includes a slider blade (51) and a slider handle (50).

13. A toilet as claimed in one of claims 8 to 12, **characterised in that**, in the inserted state (EZ) of the coffer (15), the conveying portion (4) and an inlet opening (20) of the coffer (15) are in alignment.

14. A method of operating the toilet as claimed in one of the preceding claims, **characterised by** the following steps:
a) Introducing the coffer (15) into the coffer shaft (14) and opening the inlet opening (20) of the coffer (15) by acting on the inlet cover (12) of the coffer (15);
b) Causing the coffer (15) to act on the blocking mechanism (5);
c) Actuating the blocking mechanism (7) and opening the conveying portion valve (5);
d) Moving the conveying portion valve (5) when required from a closed position for closing the conveying portion (4) into an open position for opening the conveying portion (4) and simultaneously latching the coffer (15) in the coffer shaft (14);
e) Moving the conveying portion valve (5) into the closed position;
f) Causing the conveying portion valve (5) to act on the blocking mechanism (71);
g) Operating the blocking mechanism (71) to latch the conveying portion valve (5) in the closed position of the conveying portion valve (5) and simultaneously releasing the coffer (15) for removal from the coffer shaft (14).

15. A method of operating the toilet as claimed in claim 14, wherein after step g) the removal of the coffer from the coffer shaft (14) and the closure of the inlet opening (20) of the coffer (15) by acting on the inlet cover (21) of the coffer (15) follow.

## Revendications

1. Toilettes pour véhicules, plus particulièrement pour des bus, des mobil-homes, des caravanes ou des yachts, qui comprennent une partie supérieure (2) avec une cuvette de toilettes (7) et une partie de support (3) avec un logement de cassette (14), une cassette (15), qui peut être insérée dans le logement de cassette (14), une partie de passage (4), disposée entre la cuvette de toilettes (7) et la cassette (15) se trouvant dans l'état inséré (EZ), une fermeture de partie de passage (5) permettant de fermer la partie de passage (4), et un mécanisme de blocage (71), qui peut être couplé avec la fermeture de la partie de passage (5) et la cassette (15), **caractérisées en ce que** le mécanisme de blocage (71) comprend un taquet d'entraînement de fermeture (73) et un verrou de fermeture (76), le taquet d'entraînement de fermeture (73) pouvant être encliqueté dans la fermeture de passage (5) et désencliqueté par le verrou de fermeture (76).

2. Toilettes selon la revendication 1, **caractérisées en ce que** le mécanisme de blocage (71) comprend un verrou de fermeture (76) et un verrou de cassette (75), qui sont mobiles entre des positions de déverrouillage (FS) et des positions de verrouillage (VS), grâce à un taquet d'entraînement de cassette (72) et à un taquet d'entraînement de fermeture (73) couplé au taquet d'entraînement de cassette (72).

3. Toilettes selon la revendication 1 ou 2, **caractérisées en ce que** le mécanisme de blocage (71) comprend un taquet d'entraînement de fermeture (73) pouvant être couplé à la fermeture de passage (5) et un taquet d'entraînement de cassette (72) pouvant être couplé avec la cassette (15), le taquet d'entraînement de fermeture (73) et le taquet d'entraînement de la cassette (72) étant couplés entre eux avec une transmission de mouvement.

4. Toilettes selon l'une des revendications précédentes, **caractérisées en ce que** le taquet d'entraînement de la cassette (72) peut être encliqueté dans la cassette (15) et désencliqueté par le verrou de cassette (75).

5. Toilettes selon l'une des revendications précédentes, **caractérisées en ce que** le taquet d'entraînement de fermeture (73) et le taquet d'entraînement de cassette (72) sont couplés entre eux par un élément de couplage (74), de préférence sous la forme d'un câble Bowden, d'une tige, d'un engrenage, d'un servomoteur, d'un guidage linéaire ou rotatif, d'un câble de traction, d'un entraînement par chaîne ou d'un aimant de levage, ou conçus d'une seule pièce.

6. Toilettes selon l'une des revendications précédentes, **caractérisées en ce que** le couplage du taquet d'entraînement de fermeture (73) et du taquet d'entraînement de cassette (72) est conçu de façon à ce qu'une torsion de la partie supérieure (2) par rapport à la partie de support (3) soit possible.

7. Toilettes selon l'une des revendications précédentes, **caractérisées en ce que** le verrou de fermeture (76) et le verrou de cassette (75) sont munis de ressorts (77, 78).

8. Toilettes selon l'une des revendications précédentes, **caractérisées en ce que** le mécanisme de blocage (71) est couplé avec la fermeture de passage (5) et la cassette (15).

9. Toilettes selon la revendication 8, **caractérisées en ce que** le mécanisme de blocage (71) est conçu de façon à ce que la fermeture de passage (5) n'est mobile à partir d'une position de fermeture que lorsque la cassette (15) se trouve dans l'état inséré (EZ).

10. Toilettes selon la revendication 8 ou 9, **caractérisées en ce que** le mécanisme de blocage (71) est conçu de façon à ce que la cassette (15) est fixée dans l'état inséré (EZ) lorsque la fermeture de passage (5) est hors de la position de fermeture.

11. Toilettes selon l'une des revendications 8 à 10, **caractérisées en ce qu'**un couvercle d'entrée (21) de la cassette (15) peut être ouvert en insérant la cassette (15) dans le logement de cassette (14) et peut être fermé en retirant la cassette (15) du logement de cassette (14).

12. Toilettes selon l'une des revendications 8 à 11, **caractérisées en ce que** la fermeture de passage (5) comprend une lame de poussoir (51) et une poignée de poussoir (50).

13. Toilettes selon l'une des revendications 8 à 12, **caractérisées en ce que**, dans l'état inséré (EZ) de la cassette (15), la partie de passage (4) et une ouverture d'entrée (20) de la cassette (15) sont alignées.

14. Procédé d'utilisation des toilettes selon l'une des revendications précédentes, **caractérisé par** les étapes suivantes :
a) introduction de la cassette (15) dans le logement de cassette (14) et déverrouillage de l'ouverture d'entrée (20) de la cassette (15) en agissant sur le couvercle d'entrée (21) de la cassette (15) ;
b) action de la cassette (15) sur le mécanisme de blocage (5) ;
c) actionnement du mécanisme de blocage (71) et déverrouillage de la fermeture de passage (5) ;
d) déplacement, si nécessaire, de la fermeture de passage (5), d'une position de fermeture pour la fermeture de la partie de passage (4) vers une position ouverte pour l'ouverture de la partie de passage (4) et verrouillage simultané de la cassette (15) dans le logement de cassette (14) ;
e) déplacement de la fermeture de passage (5) vers la position fermée ;
f) action de la fermeture de passage (5) sur le mécanisme de blocage (5) ;
g) actionnement du mécanisme de blocage (71) pour le verrouillage de la fermeture de passage (5) dans la position fermée de la fermeture de passage (5) et déverrouillage simultané de la cassette (15) pour le retrait hors du logement de cassette (14) ;

15. Procédé d'utilisation des toilettes selon la revendication 14, après l'étape g), le retrait de la cassette hors du logement de cassette (14) et la fermeture de l'ouverture d'entrée (20) de la cassette (15) ont lieu en agissant sur le couvercle d'entrée (21) de la cassette (15).
